(19) Europäisches Patentamt
European Patent Office
Office européen des brevets

(11) Publication number: 0 172 321 B1

(12) **EUROPEAN PATENT SPECIFICATION**

(45) Date of publication of patent specification: **19.11.87**

(51) Int. Cl.$^4$: **C 09 B 57/00**, C 09 B 23/01, G 03 G 5/06

(21) Application number: **85106381.8**

(22) Date of filing: **24.05.85**

# (54) Squarylium charge generating dye and electrophotographic photoconductor.

(30) Priority: **27.07.84 US 635013**

(43) Date of publication of application: **26.02.86 Bulletin 86/09**

(45) Publication of the grant of the patent: **19.11.87 Bulletin 87/47**

(84) Designated Contracting States: **DE FR GB**

(56) References cited: **US-A-4 175 956**

(73) Proprietor: **International Business Machines Corporation**
**Old Orchard Road**
**Armonk, N.Y. 10504 (US)**

(72) Inventor: **Champ, Robert Bruce**
**7557 Empire Drive**
**Boulder Colorado 80303 (US)**
Inventor: **Vollmer, Robert Lee**
**3901 E. Apache Court**
**Boulder Colorado 80303 (US)**

(74) Representative: **Arrabito, Michelangelo**
**IBM ITALIA S.p.A. Direzione Brevetti MI-SEG-555**
**P.O. Box 137**
**I-20090 Segrate (Milano) (IT)**

**EP 0 172 321 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

The present invention is concerned with electrophotographic photoconductors, and with the health effects of the compounds present in the photoconductor. In particular, this invention is concerned with the reproducibility and cost of the photoconductor's generating dye molecule, while at the same time ensuring that the dye molecule does not have a positive response in the Ames test for mutagenicity. In addition, a photoconductor using the dye must have superior photoconductor electrical response.

Squaric acid methine dyes are known compounds. US—A—3,824,099 describes squarylium dye molecules as photogenerating species in a xerographic photoconductor's charge generation layer. Commonly assigned US patent application Serial Number 391,746, filed June 24, 1982, discloses purification techniques necessary to make a superior OHSQ generating molecule in this generic family of dyes, having Ames negative properties.

The invention as claimed is a dye of the squarylium family, i.e., OHPYRRSQ, which can be used to make a superior xerographic photoconductor, is Ames negative, and yet is easy and inexpensive to produce.

The molecular formula of this new dye is

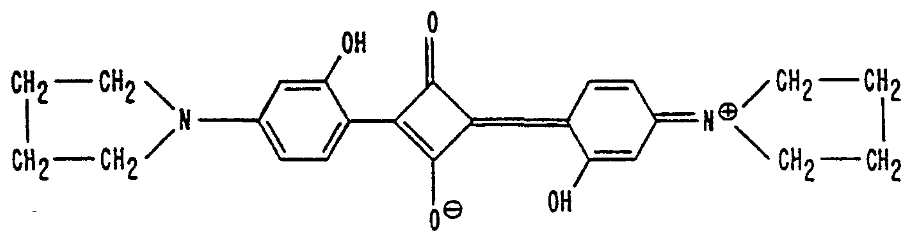

Layered electrophotographic plates of the present invention comprise a conductive substrate, the specific squarylium charge generating dye specie hydroxy pyrrolidino squarylium, or OHPYRRSQ, and a hole transport material. Electrophotographic photoconductors of this structure are extremely sensitive and have a panchromatic response which extends to 900 nm. A particularly suitable field for their use is with printers having solid state lasers emitting in the 750 to 850 nm range.

The health issues of electrophotographic photoconductors have always been a concern. For example, prior art photoconductors containing 2,4,7 trinitro-9-fluorenone have been shown to be positive in the Ames test for mutagenicity.

In any given generic class of photogenerating dye molecules, usually one specific dye structure is preferred, and this structure is optimized to give the best overall performance. If this structure is then found to have an environmental health problem, finding a viable substitute is not a trivial task.

It was therefore unexpected that, as discovered by the present invention, the new dye molecule OHPYRRSQ, a member of the generic squarylium class, could be formulated in a manner to give the same electrophotographic performance as its Ames positive family member(s), and yet was routinely Ames negative, with no purification of the starting materials being required.

There are several well known electrophotographic reproduction processes in current use. They differ in their particular process steps, particularly in the sequence in which electric charging (usually with a corona) and illumination are carried out. All electrophotographic reproduction processes, however, involve the process step of selectively rendering portions of a photoconductor electrically conductive, by selective exposure to light.

The charge generating dye compound of the present invention is useful in making electrophotographic plates useful in all such processes.

It is one of the advantages of the present invention that the OHPYRRSQ generating molecule may be used with a wide variety of transport molecules, belonging to various molecule classes. Among the useful classes of transport molecules are the hydrazones, pyrazolines, fluorenones and triphenylmethanes. Alternatively the charge transport material may be an inorganic material such as selenium.

The charge generating molecule of the present invention may be used on top of the charge transport layer, beneath the charge transport layer, or may be inner mixed with the charge transport molecule to form a single layer photoconductor. For mechanical reasons, it is generally preferred that the charge transport layer be the photoconductor's top layer. When the charge generating molecule is utilized as a separate charge generating layer, this layer is generally on the order of 1 µm or less in thickness. The transport layer can be from 10 to 30 µm in thickness.

In forming charge generating layers of the present invention, the OHPYRRSQ squarylium dye may be used alone; however, it is preferred to use the dye in conjunction with a polymeric binder or mixture of binders. The optimum ratio of dye to binder is generally from about 0.1 to 0.9. Many types of binder materials are known from the prior art. Among these are aryl sulfonamide polymers, epoxy resins, polycarbonates and polyesters.

The photoconductivity phenomenon involves at least two steps:

(1) generating a charge, and (2) transporting the charge. The present invention utilizes the ability of the squarylium dye to efficiently generate electron-hole pairs upon absorption of light, thus giving rise to a

latent electrostatic image, after the appropriate carriers are injected into the conductive ground plane and the transport molecule.

Among the unexpected advantages of the present invention is that this particular squarylium dye can be formulated into a generating aggregate specie.

Aggregation is generally believed to be a short range order between molecules, allowing electronic transitions to occur between these molecules, giving rise to a much broadened absorption spectrum. These aggregates occur much more easily is the molecule is locked in a planar structure. The moieties on the molecule of the present invention operate to ensure the planarity of the molecule, so that short range ordering will occur during fabrication of the photoconductor, thereby giving broad spectral response and efficient generation.

Preparation of the dye of the present invention, 2,4-di-(o-hydroxy-p-pyrrolidino phenyl) cyclobutene diylium-1,3-diolate (hydroxy pyrrolidino squarylium, or OHPYRRSQ), is as follows:

Into a 1 liter 3-neck flask place 360 ml of toluene, 210 ml of n-butanol, 29.34 g (.18 mole) of meta pyrrolidino phenol, and 10.26 g (.089 mole) of squaric acid. The flask is equipped with a reflux condenser and Dean-Stark receiver. The mixture is heated to reflux for 24 h, allowed to cool and filtered warm. The product is washed with n-butanol, toluene and ethyl alcohol. The product is slurried at 50°C for 10 min with 50/50 toluene and n-butanol, collected by filtration, washed with ethyl alcohol, and dried at 50°C under high vacuum for 4 h. The yield was 29.9 g or 81%.

Ames test of the prior art dye 2,4-di-(o-hydroxy-p-dimethylamino phenyl) cyclobutene diylium-1,3-diolate was then conducted. This dye is of the type shown in Example 11 of aforesaid US—A—3,824,099.

This mutagenicity testing was performed using DMSO as the solvent. Six dose levels were tested in duplicate, with and without metabolic activation, in five tester strains (TA1535, TA1537, TA1538, TA98, and TA100). The tests were repeated to ensure reproducibility.

Only those tester strains which gave results in excess of 2× over background are given below.

| Test no. | Assay no. | TA1538 × background | TA98 × background |
|---|---|---|---|
| 1 | 1 | 2.9 | 2.4 |
| | 2 | 2.9 | 2.3 |
| 2 | 1 | 2.8 | 2.7 |
| | 2 | 3.3 | 2.90 |

The dimethylamino phenol precursor had to be distilled and the dye had to be rigorously purified in order to obtain the above borderline positive results. If this were not done, the assay would have been highly mutagenic. For example, without purification, this prior art compound showed the following results:

| Test no. | Assay no. | TA1548 × background | TA98 × background |
|---|---|---|---|
| 1 | 1 | 4.9 | 2.6 |
| | 2 | 6.8 | 3.3 |

Ames test of the 2,4-di-(o-hydroxy-p-pyrrolidino phenyl) cyclobutene diylium-1,3-diolate (hydroxy pyrrolidino squarylium or OHPYRRSQ) of the present invention dye was conducted.

This compound was examined for mutagenic activity in the Ames Salmonella/microsome assay using the five standard strains of Salmonella typhimurium: TA1535, TA1537, TA1538, TA98 and TA100. All assays were performed in duplicate, both in the presence and the absence of a rat-liver metabolic activation system. DMSO was used as the solvent.

The compound was tested on two separate days at doses ranging from 10 to 5000 µg/plate. Low-level S-9 was used in the first assay and high-level S-9 was used in the confirming assay. Precipitate was observed at and above the 500 µg/plate dose level, and these plates were handcounted. No mutagenic activity was seen in either assay performed.

An Ames test was run on a xerographic photoconductor utilizing the dye of the present invention.

The photoconductor was sonicated, at a concentration of 25 $cm^2$ of film per 5 ml of dimethylsulfoxide, for 20 min. The extract was then split, with half kept in the dark, and half exposed to visible light for 4 h. The extracts were tested at doses ranging from 5—200 µl/plate, with and without metabolic activation, in strains TA1538 and TA98.

These two strains were selected because they had been previously shown to be optimal for detecting the mutagens formed from the photochemical degradation of DEH, as initiated by hydroxy dimethylamino squarylium.

No mutagenic activity was detected. This was in contrast to the results obtained with a photoconductor made from hydroxy dimethylamino squarylium and DEH, whose extracts were mutagenic under these conditions.

Xerographic photoconductors were prepared from the dye of the present invention. The photoconductors were made in the following manner: 0.25 g of hydroxy pyrrolidino squarylium was dissolved in 3 ml of Ethylenediamine. Upon complete dissolution the resultant solution becomes straw colored. To this solution was added, with stirring, a solution of: 1.5 g of Epon 1009, a brand of epoxy resin by Shell Oil Company; 1.0 g of 1,1 diphenyl hydrazone-p-diethylaminobenzaldehyde (DEH) and 25 ml of tetrahydrofuran. The resulting pale green solution was coated onto an aluminized mylar substrate by means of a meniscus coater. The coating speeds were 61, 91.4, 122 and 152.4 cm/min. The resultant coating was cured for 40 min at 100°C. This layer itself will support either a negative or positive charge, and is sensitive to actinic radiation. That is to say, by coating this layer to a thickness that would support the proper Dark Voltage, the result is a useable single layer photoreceptor. However, in this example the above coated layer was used as a generating layer and was overcoated with a transport layer consisting of the following: 44% by weight of Merlon M—60, a brand of polycarbonate resin by Mobay Chemical Co., 16% PE—200, a brand of polyester resin available by Goodyear Company, and 40% DEH. A solution of the above in tetrahydrofuran was coated to a dry thickness of 2.092 mg/cm$^2$ atop the hydroxy pyrrolidino squarylium generating layer.

The following table shows the electrical performance of these layered photoconductors:

| Coating Speed | Energy 600 to 150 V | Dark Decay |
|---|---|---|
| 61 cm/min (2 f/min) | 1.5 μJ/cm$^2$ | 67 V/s |
| 91.4 cm/min (3 f/min) | 1.1 μJ/cm$^2$ | 89 V/s |
| 122 cm/min (4 f/min) | 1.2 μJ/cm$^2$ | 128 V/s |
| 152.4 cm/min (5 f/min) | 1.6 μJ/cm$^2$ | 110 V/s |

The spectral sensitivity of the above photoconductor which was coated at 91.4 cm/min is tabulated below:

| Wavelength | Energy 600 to 50 V |
|---|---|
| 500 nm | 3.4 μJ/cm$^2$ |
| 600 nm | 1.8 μJ/cm$^2$ |
| 700 nm | 1.55 μJ/cm$^2$ |
| 800 nm | 1.4 μJ/cm$^2$ |
| 850 nm | 1.3 μJ/cm$^2$ |

A xerographic photoconductor was prepared as in the previous example, with the exception that the OHPYRRSQ dye of the present invention was replaced by 2,4-di-(p-pyrrolidino phenyl) cyclobutene diylium-1,3-diolate, i.e., a dye of the squarylium family which does not readily form an aggregate. While the reason for this dye's failure to form an aggregate is not known, it is believed that the aggregate is not formed due to the non-planar nature of the molecule.

In this instance, upon curing of the charge generation layer very little visual optical density was noticed, and when the photoconductor was tested on a rotating disk electrometer no substantial photoconductivity was present. Thus, it was shown that this dye could not be used as a photogenerating dye in the same formulation as the dye of said previous example.

This was also true with the following prior art squarylium dyes.

2,4-di-(o-methyl-p-pyrrolidino phenyl) cyclobutene diylium-1,3-diolate

This dye exhibited a monomer specie present on curing, and had no substantial photoconductivity.

2,4-di-(dihydroxyethylaminophenyl) cyclobutene diylium-1,3-diolate

2,4-di-(o-methyl-p-dimethylamino phenyl) cyclobutene diylium-1,3-diolate

These dyes also exhibited a monomer specie present on curing, and had no substantial photoconductivity.

2,4-di-(o-methyl-p-dimethylamino phenyl) cyclobutene diylium-1,3-diolate

This dye exhibited only a monomer specie present on curing, and had no substantial photoconductivity.

Both the prior art hydroxy dimethylamino squarylium dye (OHSQ) and the hydroxy pyrrolidino squarylium dye of the present invention were coated and compared for photoconductor performance. The formulations were indentical, except for the generating dye molecule. Aluminized 76.2 µm polyester substrate was used as the conductive ground plane. This substrate was then coated with an organic barrier layer consisting of 35% Santolite MHP, a brand of aryl sulfonamide resin by Monsanto Chemical Company, and 65% Elavamide 8061, a brand of polyamide resin by E. I. DuPont. The percentages given are by weight. The dry coating thickness was about 0.01 µm. Alcohol was used as the coating solvent.

An adhesive sublayer was then coated over the barrier layer. This layer consisted of a 50/50 mixture of Santolite and PE—200, a brand of polyester resin by Goodyear Company. This layer is coated from tetrahydrofuran to a dry thickness of about .02 µm.

A generating layer was then coated above the barrier and adhesive layers. The dye is dissolved in the secondary amines pyrrolidine and morpholine, and then diluted with tetrahydrofuran containing Santolite. The amine/THF concentration was 16/84 by volume. The Santolite/dye ratio was 80/20 by weight. The dry coating thickness was about .05 µm.

A charge transport layer was then coated above the other layers. It consisted of 55% by weight polycarbonate resin M—60, a brand of this resin by Mobay, 5% PE—200, 39.25% DEH, and .75% Acetosol Yellow GLS, a brand of dye by Sandoz. The coating solvent was THF, and the dry coating thickness was 20 µm. An electrical comparison of the two dye molecules so coated was as follows.

Data obtained from an 820 nm GaAlAs laser printer:

| Parameter | OHSQ | OHPYRRSQ | Units |
|---|---|---|---|
| Dark Voltage | −704 | −686 | V |
| Energy to 225V | 0.53 | 0.42 | µJ/cm$^2$ |
| Residual at 1.4µJ/cm$^2$ | −50 | −57 | V |
| Dark Fatigue 2k | −50 | −65 | V |
| Light Fatigue 2k | −43 | −36 | V |

Data obtained from a 632.8 nm HeNe laser printer:

| Parameter | OHSQ | OHPYRRSQ | Units |
|---|---|---|---|
| Dark Voltage | −671 | −635 | V |
| Voltage 1.1 µJ/cm$^2$ | −226 | −186 | V |

Data obtained from an IBM Series III copier configuration:

| Parameter | OHSQ | OHPYRRSQ | Units |
|---|---|---|---|
| Dark Voltage | −650 | −635 | V |
| Energy to 50V | 1.6 | 1.6 | µJ/cm$^2$ |
| Dark Decay | 27 | 26 | V/s |

It can be seen from the above data that the two photoreceptors are very similar and both show excellent electrical performance. Thus, Ames negative OHPYRRSQ is shown to be a viable substitute for OHSQ.

**Claims**

1. The dye molecule 2,4-di-(o-hydroxy-p-pyrrolidino phenyl) cyclobutene diylium-1,3-diolate (i.e., hydroxy pyrrolidino squarylium, OHPYRRSQ).

2. A xerographic photoconductor wherein the charge generator is 2,4-di-(o-hydroxy-p-pyrrolidino phenyl) cyclobutene diylium-1,3-diolate.

3. A xerographic photoconductor comprising a conductive substrate, a charge generating layer containing the generating molecule 2,4-di-(o-hydroxy-p-pyrrolidino phenyl) cyclobutene diylium-1,3-diolate, and a charge transport layer.

4. A photoconductor as claimed in claim 2 overcoated with a charge transport layer.
5. A photoconductor as claimed in claim 4 wherein said charge generating layer contains a binder.
6. A photoconductor as claimed in claim 5 wherein said charge generating layer is an aggregate.

**Revendications**

1. Molécule de 2,4-di-(o-hydroxy-p-pyrrolidino phényl) cyclobutène diylium-1,3-diolate (c'est-à-dire de l'hydroxy pyrrolidino squarylium, OHPYRRSQ) comme colorant.
2. Photoconducteur xérographique dans lequel le générateur de charges est du 2,4-di-(o-hydroxy-p-pyrrolidino phényl) cyclobutène diylium-1,3-diolate.
3. Photoconducteur xérographique comprenant un substrat conducteur, une couche génératrice de charges contenant la molécule génératrice de 2,4-di-(o-hydroxy-p-pyrrolidino phényl) cyclobutène diylium-1,3-diolate et une couche de transport de charges.
4. Photoconducteur suivant la revendication 2, revêtu avec une couche de transport de charges.
5. Photoconducteur suivant la revendication 4, dans lequel ladite couche génératrice de charges, contient un liant.
6. Photoconducteur suivant la revendication 5, dans lequel ladite couche génératrice de charges, est un agrégat.

**Patentansprüche**

1. Das Farbstoffmolekül 2,4-Di-(o-hydroxy-p-pyrrolidinophenyl)cyclobutendiylium-1,3-diolat (d.h., Hydroxypyrrolidinosquarylium, OHPYRRSO).
2. Xerographischer Photoleiter, bei welchem der Ladungserzeuger 2,4-Di-(o-hydroxy-p-pyrrolidinophenyl)cyclobutendiylium-1,3-diolat ist.
3. Xerographischer Photoleiter, welcher ein leitfähiges Substrat, eine ladungserzeugende Schicht, welche das erzeugende Molekül 2,4-Di-(o-hydroxy-p-pyrrolidinophenyl)cyclobutendiylium-1,3-diolat enthält, und eine Ladungstransportschicht umfaßt.
4. Photoleiter nach Anspruch 2, welcher mit einer Ladungstransportschicht überzogen ist.
5. Photoleiter nach Anspruch 4, bei welchem die ladungserzeugende Schicht einen Binder enthält.
6. Photoleiter nach Anspruch 5, bei welchem die ladungserzeugende Schicht ein Aggregat ist.